# EUROPEAN PATENT SPECIFICATION

(11) **EP 1 813 833 B1**
(45) Date of publication and mention of the grant of the patent: **30.07.2008**
(21) Application number: 07101443.5
(22) Date of filing: 30.01.2007
(51) Int. Cl.: F16D 65/12

(54) **Low friction stator insert assembly**
Statoreinsatzanordnung mit geringer Reibung
Assemblage d'un insert pour stator à faible friction

(30) Priority: 31.01.2006 US 342584
(43) Date of publication of application: 01.08.2007
(73) Proprietor: Honeywell International Inc., Morristown NJ 07962 (US)
(72) Inventor: Scelsi, Anthony, Elkhart, MI 46514 (US); Mills, Roger T., Osceola, IN 46561 (US); Getz, Paul D., Niles, MI 49120 (US)
(74) Representative: Haley, Stephen

(56) References cited:
- EP-A1- 1 065 403
- US-A- 3 345 109
- US-A- 5 273 140

## Description

This invention relates to carbon-carbon composite brake discs, and more particularly, to brake disc drive inserts for use in carbon-carbon composite brake discs. The present invention provides an improved friction surface in annular drive inserts that are received rotatably within generally annular openings within a brake disc.

Large aircraft typically include brake assemblies which employ a plurality of brakes discs alternatingly splined to the wheel and non-rotating brake frame of the aircraft. Carbon-carbon composite brake discs, because they have improved braking and heat sink characteristics as well as weight advantages, have become the brake discs of choice for this application. However, carbon-carbon composite brake discs generally have less strength than comparable steel discs. It is important therefore to provide specially constructed drive means to reinforce the peripheral slots in the discs and to relieve the severe stressing that otherwise would rapidly deteriorate the periphery of the discs. Among the patents that describe inserts are US 3,800,392, US 3,934,686, US 3,972,395, US 4,007,914, US 4,083,434, US 4,465,165, US 4,469,204, US 4,511,021, US 4,557,356, US 4,784,246, US 5,273,140, US 5,560,452, and US 5,634,535.

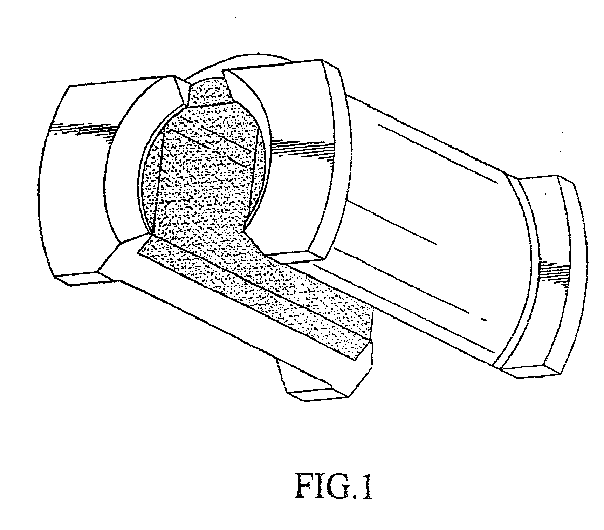

U.S. Patent No. 5,273,140 (Fred W. Berwanger) describes a brake disc annular drive insert according to the preamble of claim 1. The drive insert described by Berwanger comprises a generally cylindrical member with radially extending flanges at opposite axial ends thereof.
The Berwanger drive insert includes a generally cylindrical body having an opening at one side thereof which extends diametrically into the body and terminates at a point between the center of revolution of the body and an outer surface of the body. The opening in the body extends to an inner surface of the body to provide a generally rectangular opening for receiving a spline of a torque tube- The Berwanger drive insert is typically made of steel. The flanges of the Berwanger drive insert may comprise either generally annular flanges shaped complementary with the generally cylindrical body and or may be truncated at a side opposite the opening in the body.
In his Figure 1, Berwanger shows an aircraft carbon-carbon composite brake disc that is generally annular in shape that includes a central generally annular opening.
Located about the periphery of the central opening is a plurality of slot openings or recesses receiving therein brake disc annular drive inserts in accordance with the Berwanger invention.

The present invention provides an Improvement on the brake disc annular drive insert described in US 5,273. 140. The present invention protects the stator drive slots from wear. Of course, the carbon-carbon composite insert employed in this invention will be subject to wear. However, the C-C insert is easily replaceable.
Also, this invention provides a low friction interface for torque tube splines. Thus the present invention also increases braking torque.

The Berwanger design provides wear resistance to the carbon-carbon composite disc drive slot by flanges on the insert which prevent relative axial motion between these two parts. Relative axial motion occurs between the insert and the torque tube spline. Inasmuch as the coefficient of friction between the insert and the spline is greater than that between a bare drive slot and the spline, the normal force between the brake discs is reduced, resulting in lower brake torque.

The present invention provides a low friction material bed within the steel insert with flanges described by Berwanger. In the practice of the present invention, the steel insert with flanges may be manufactured with a cut-out area designed to receive the low friction material bed. The low friction material bed of the present invention may be made of carbon-carbon composite material, and is preferably cylindrical in shape. It is retained within a complementary (e.g., cylindrical) cavity in the steel insert by radially inward extending flanges at opposite ends thereof. The geometry of the insert and its steel sheath naturally retains the carbon insert in place, in much the same way that the steel insert assembly is retained in place in the carbon brake disc itself. It is simply rotated into position, and once installed into a brake, it is impossible to rotate loose.

Thus this invention provides brake disc drive inserts for use in carbon-carbon composite brake discs. A rotatable brake disc annular drive insert in accordance with the present invention includes a cylindrical steel body having one side of the body truncated to provide an insert opening which extends axially through the body. The insert opening extends into the body along a diameter of the body and the insert opening terminates at a radially extending surface located between the revolutions center of the body and an outer surface of the body. End flanges extend radially outwardly from the outer surface of the body to provide for axial positioning of the drive insert relative to a brake disc. Unlike in previously known drive inserts, in accordance with this invention the drive insert opening has a lining comprising carbon-carbon composite material. The resulting low friction carbon-carbon composite material bed that is positioned between the steel insert component and the torque tube spline location pursuant to this invention provides significantly lower friction and enables significantly greater disc clamping and brake torque.

The rotatable brake disc drive insert lining of carbon-carbon composite material in accordance with this invention may be made with nonwoven fiber matrices or with random fiber matrices. These fiber matrices may be needled to reduce the possibility of chipping in the final product.

In accordance with this invention, the insert opening in the rotatable brake disc drive insert body may be cylindrical in shape. The insert bodies themselves are typically about 0.75 inches in diameter and from 0.75 to 1.5 inches in length (1 inch ≙ 2.54 cm). The opening extending into the insert lining is generally rectangular in shape to provide a seat for a spline member of a torque tube. Each of the end flanges extending from the cylindrical steel body may have a truncated portion disposed opposite from the one side of the body, However, any convenient dimensions and configurations may be employed with the invention described herein.

In a preferred embodiment of the present invention, the brake disc containing rotatable brake disc drive inserts of the invention is a stator. Accordingly, the present invention also contemplates a brake disc stator that includes a plurality of the rotatable brake disc annular drive inserts described herein.

### In the Drawings:

Figure 1 is a perspective view of a brake disc annular drive insert in accordance with the present invention.

Figure 2 is a perspective view of a steel body of a brake disc annular drive insert in accordance with the present invention.

Figure 3 is a perspective view of a carbon-carbon composite lining for a brake disc annular drive insert in accordance with the present invention.

Figure 4A is a sectional end view of an alternative brake disk annular drive of this invention.

Figure 4B is a sectional bottom view of an alternative brake disk annular drive of this invention.

Figure 4C is a sectional end view of yet another alternative brake disk annular drive of the present invention.

Figure 5A is a top plan view of an aircraft carbon-carbon composite brake disc coupled with a torque tube via annular drive inserts in accordance with the present invention.

Figure 5B is an enlarged view of the circled section of Figure 5A.

An aircraft carbon-carbon composite brake disc is generally annular in shape and includes an outer diameter circumference and a central generally annular opening. Located about the periphery of the opening is a plurality of slot openings or recesses receiving therein brake disc annular drive inserts. These recesses are generally annularly shaped slots extending radially outwardly from the opening of the disc. These annular drive inserts couple a torque tube with the disc, the torque tube being non-romtably coupled with an axle of an aircraft. The torque tube includes radially extending short splines which extend within the openings of respective annular drive inserts. Each annular drive insert comprises a generally cylindrical body that rotatably engages the surface of a recess on the periphery of the opening in the annular carbon-carbon composite brake disc. The body of the insert is truncated at one side and provides an opening which extends diametrically into the cylindrical body. The opening extends past the center of revolution of the body and terminates in a surface (which may or may not be flat) located between the center of revolution and the outer surface of the cylindrical body. At opposite axial ends of the cylindrical body are radially extending flanges that engage opposite sides of the disc to retain the drive insert axially within the annularly shaped slot (that is, within the recess in the carbon-carbon composite brake disc).

In accordance with the present invention, the insert opening has a lining made of carbon-carbon composite material. The shape of the cavity in the steel insert which receives the lining will generally be the same as that of the outside diameter of the carbon-carbon composite insert. When the lining cavity in the steel insert is cylindrical, then a cylindrical outer shape for the carbon-carbon composite insert fits rotatably into the steel insert and is self-retained without adhesive. Employing similar surface shapes in this manner facilitates distribution of load between the parts and minimizes bearing stress. In an alternative embodiment where the two surfaces are not cylindrical, adhesive may be required. This is generally not desirable, however, because replacement of the carbon-carbon composite insert due to wear will be more difficult if adhesive is used.

Although the above description refers to the annular drive inserts in combination with a Stator brake disc and a torque tube, the drive insert of the present invention can also be located rotatably in an annular recess at the outer circumferential edge surface of a rotor disc in order to couple the rotor disc with an aircraft wheel. The wheel would include either an integral axially extending drive boss or an attached drive key to provide a drive member coupled with the rotatable drive insert in the same manner that the torque tube spline is coupled with the drive insert rotatably positioned in the recess of the stator brake disc.

Further details on brake disc annular drive inserts can be found in U.S. Patent No. 5,273,140 (Berwanger)

Specifics of the present invention are described with reference to the drawings which accompany this application.

Figure 1 shows a brake disc annular drive insert in accordance with the present invention. In the embodiment illustrated in Figure 1, an elongated cylindrical body made of steel has an axially extending insert opening which is lined with carbon-carbon composite material insert bodies in accordance with the present invention may be made of the sorts of steel normally employed for the manufacture of insert bodies. A typical grade of steel is 17-4PH stainless steel. The kinds of dense carbon-carbon composite materials of the type normally employed in C-C composite braking components may be employed to make drive inserts in accordance with this invention. Preferred carbon-carbon composite drive inserts in accordance with this invention are based on nonwoven fiber matrices, because the needling process used in the manufacture of the nonwoven-type, carbon-carbon composites helps to prevent chipping in the final product. However, random fiber carbon-carbon composites can also be used herein.

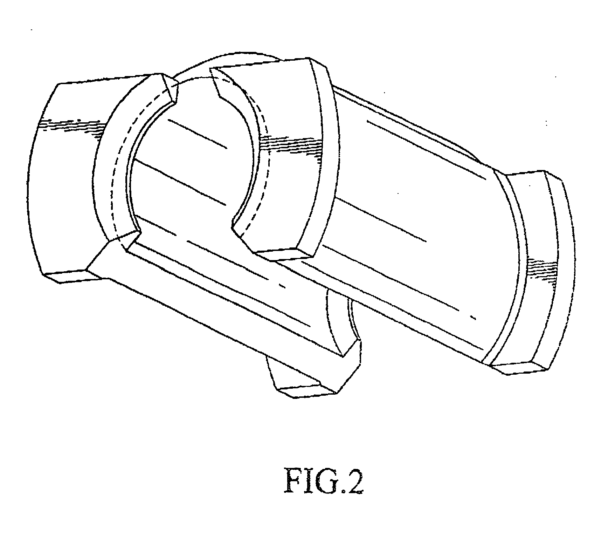

Figure 2 shows the cylindrical steel body of a brake disc annular drive insert in accordance with this invention. In Figure 2, one can see the bed in which carbon-carbon composite material is to be located to provide the improved brake disc annular drive insert of this invention.

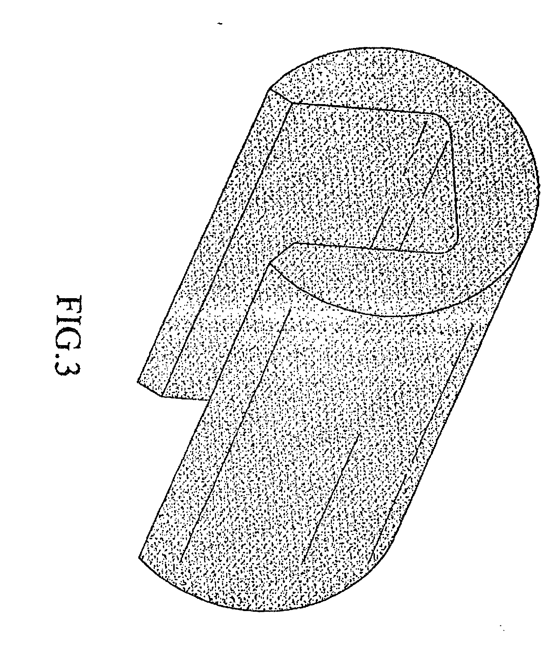

Figure 3 shows a carbon-carbon composite lining for a brake disc annular drive insert of this invention. In accordance with the present invention, the carbon-carbon composite lining shown in Figure 3 would be positioned in the bed which can be seen in the cylindrical steel body of a brake disc annular drive insert shown in Figure 2 in order to make the brake disc annular drive insert having carbon-carbon composite on its friction surfaces, as illustrated in Figure 1.

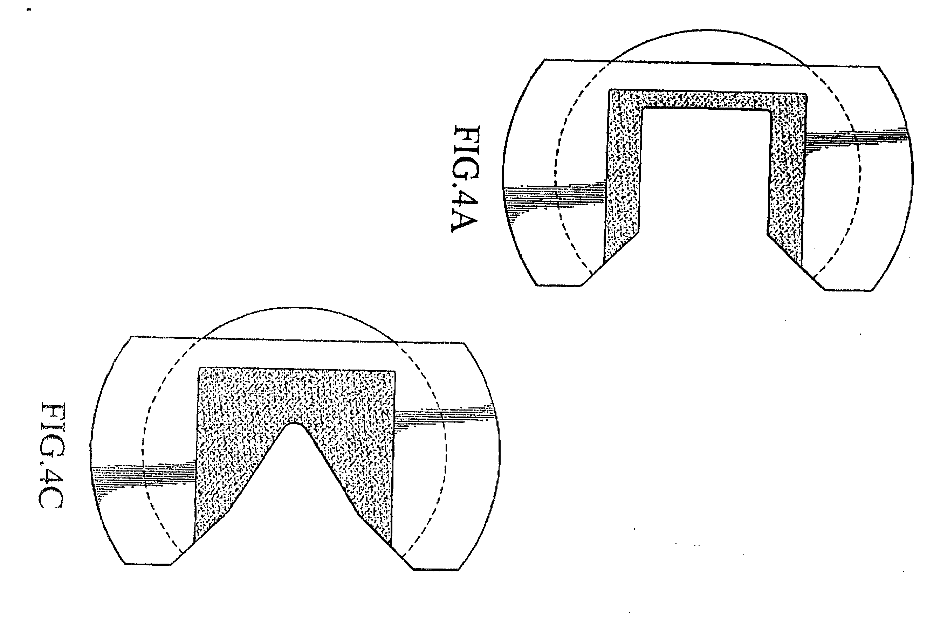

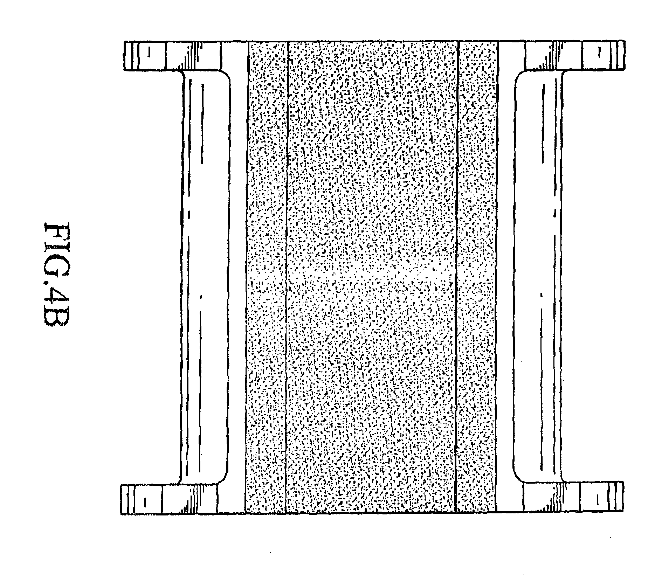

Figures 4A and 4B show respectively a sectional end view and a sectional bottom view of a less preferred, alternative brake disk annular drive in accordance with the present invention. In this embodiment, the carbon-carbon composite insert has a "square" rather than a circular outer profile. In another, less preferred embodiment of this invention, the carbon-carbon composite may be held in place within the steel insert by adhesive. Non-parallel lining sides are illustrated in Figure 4C.

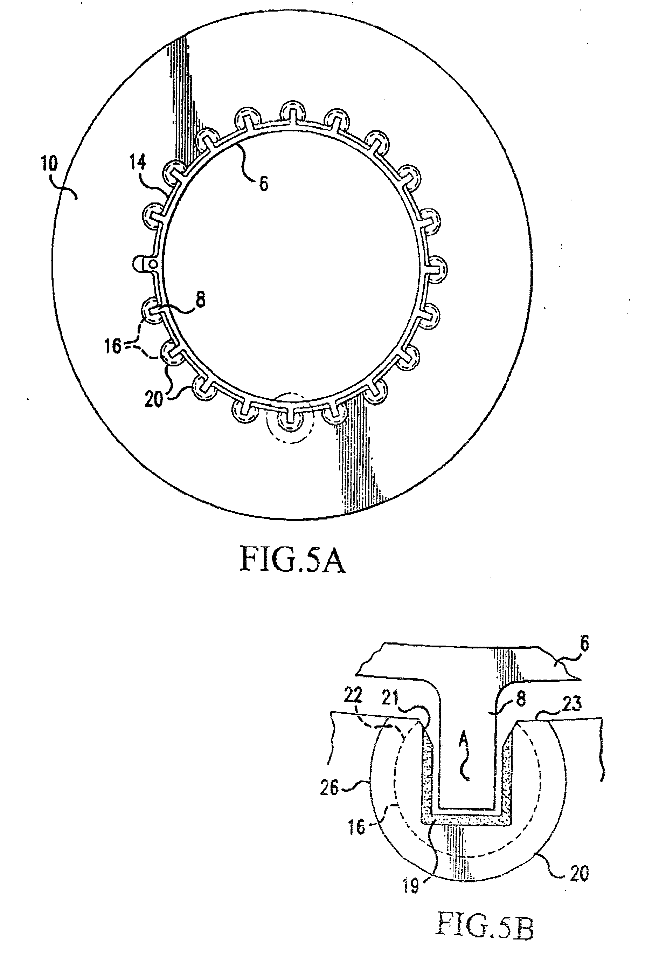

With reference to Figure 5A, an aircraft carbon-carbon composite brake disc 10 is generally annular in shape and includes a central generally annular opening 14. A plurality of slot openings or recesses receiving therein brake disc annular drive inserts 20 is located about the periphery of opening 14. Recesses 16 of disc 10 are generally annularly shaped slots extending radially outwardly from opening 14 of disc 10. Annular drive inserts 20 couple torque tube 6 with disc 10. The torque tube is non-rotatably coupled with an axle (not shown) of an aircraft.

As illustrated in Figure 5B, torque tube 6 includes radially extending short spines 8 which extend within openings 21 of respective annular drive inserts 20. In accordance with the present invention, each opening 21 is lined with carbon-carbon composite material 19. Each annular drive insert 20 comprises a generally cylindrical body 22 which rotatably engages the surface of recess 16. Body 22 is truncated at side 23 and provides opening 21 which extends diametrically into cylindrical body 22. Opening 21 extends past the center of revolution A of body 22. At opposite axial ends of cylindrical body 22 are radially extending flanges 26 which engage opposite sides of disc 10 to retain drive insert 20 axially within annular slot 16.

The present invention is not limited as to dimensions of the rotatable brake disc annular drive insert lining or of the steel body of the brake disc into which it is inserted. Typical insert bodies in accordance with this invention are 0.75 inches in diameter and from 0.75 to 1.5 inches in length. However, other sizes may likewise be appropriate in individual circumstances. In accordance with this invention, the carbon-carbon composite drive insert lining rests inside the steel insert body-Accordingly, its dimensions arc selected to be proportional to the steel insert body. For instance, for a steel body 1.5 inches long with a wall having a thickness of 0.10 inches on both ends and an outer diameter of 0.75 inches, the carbon-carbon insert lining would be approximately 1.3 inches long and 0.55 inches in diameter. In accordance with this invention, the drive insert lining will normally have a slot that is slightly larger than the torque tube spline along which it slides. That is, the width of the slot in the carbon component will be slightly greater than the width of the torque tube spline.

In the present invention, wear resistance is provided just as it is with the Berwanger design. However, the low friction carbon-carbon composite material bed that is positioned between the steel insert component and the torque tube spline location provides significantly lower friction and enables significantly greater disc clamping and brake torque.

## Claims

1. A rotatable brake disc annular drive insert comprising a cylindrical steel body having one side of said body truncated to provide an insert opening which extends axially through the insert body, the insert opening extending into the body along a diameter of said body such that the insert opening terminates at a radially extending surface located between the revolutional center of said body and an outer surface of the body, and end flanges extending from said body, each of said end flanges extending radially outwardly from the outer surface of said body to provide for axial positioning of said drive insert relative to a brake disc **characterised in that** said insert opening has a lining (19) comprising carbon-carbon composite material.

2. The rotatable brake disc drive insert of claim 1, **characterised in that** said lining of carbon-carbon composite material is made with random fiber matrices.

3. The rotatable brake disc drive insert of claim 1, **characterised in that** said lining of carbon-carbon composite material is made with nonwoven fiber matrices.

4. The rotatable brake disc drive insert of claim 3, **characterised in that** said lining of carbon-carbon composite material is made with needled nonwoven fiber matrices.

5. The rotatable brake disc drive insert of claim 1, **characterised in that** said insert opening is cylindrical in shape.

6. The rotatable brake disc drive insert of claim 1, **characterised in that** said insert is 0.75 inches in diameter and from 0.75 to 1.5 inches in length.

7. The rotatable brake disc drive insert of claim 1, **characterised in that** the insert opening extending into said body is generally rectangular in shape to provide a seat for a spline member of a torque tube.

8. The rotatable brake disc drive insert of claim 1, **characterised in that** each of said flanges has a truncated portion disposed opposite from the one side of said body.

9. The rotatable brake disc drive insert of claim 1, **characterised in that** the brake disc is a stator.

10. A brake disc stator that includes a plurality of the rotatable brake disc annular drive inserts of claim 1.

## Patentansprüche

1. Ringförmiger Antriebseinsatz für eine drehbare Bremsscheibe, der einen zylindrischen Stahlkörper umfasst, wobei eine Seite des Körpers angeschnitten ist, um eine Einsatzöffnung bereitzustellen, die sich axial durch den Einsatzkörper erstreckt, wobei sich die Einsatzöffnung entlang einem Durchmesser des Körpers so in den Körper hinein erstreckt, dass die Einsatzöffnung an einer sich radial erstreckenden Oberfläche endet, die sich zwischen dem Drehzentrum des Körpers und einer äußeren Oberfläche des Körpers befindet, sowie sich vom Körper aus erstreckende Endflansche umfasst, wobei sich jeder der Endflansche von der äußeren Oberfläche des Körpers aus radial nach außen erstreckt, um eine axiale Positionierung des Antriebseinsatzes im Verhältnis zur Bremsscheibe zu ermöglichen, **dadurch gekennzeichnet, dass** die Einsatzöffnung eine Auskleidung (19) aus Carbon/Carbon-Verbundmaterial hat.

2. Antriebseinsatz für eine drehbare Bremsscheibe nach Anspruch 1, **dadurch gekennzeichnet, dass** die Auskleidung aus Carbon/Carbon-Verbundmaterial unter Verwendung statistischer Fasermatritzen hergestellt ist.

3. Antriebseinsatz für eine drehbare Bremsscheibe nach Anspruch 1, **dadurch gekennzeichnet, dass** die Auskleidung aus Carbon/Carbon-Verbundmaterial unter Verwendung ungewebter Fasermatritzen hergestellt ist.

4. Antriebseinsatz für eine drehbare Bremsscheibe nach Anspruch 3, **dadurch gekennzeichnet, dass** die Auskleidung aus Carbon/Carbon-Verbundmaterial unter Verwendung genadelter ungewebter Fasermatritzen hergestellt ist.

5. Antriebseinsatz für eine drehbare Bremsscheibe nach Anspruch 1, **dadurch gekennzeichnet, dass** die Einsatzöffnung zylinderförmig ausgebildet ist.

6. Antriebseinsatz für eine drehbare Bremsscheibe nach Anspruch 1, **dadurch gekennzeichnet, dass** der Einsatz einen Durchmesser von 0,75 Zoll und eine Länge von 0,75 bis 1,5 Zoll hat.

7. Antriebseinsatz für eine drehbare Bremsscheibe nach Anspruch 1, **dadurch gekennzeichnet, dass** die sich in den Körper hinein erstreckende Einsatzöffnung allgemein rechtwinklig ausgebildet ist, um einen Sitz für ein Keilelement eines Schubrohrs bereitzustellen.

8. Antriebseinsatz für eine drehbare Bremsscheibe nach Anspruch 1, **dadurch gekennzeichnet, dass** jeder der Flansche einen der einen Seite des Körpers gegenüberliegenden angeschnittenen Abschnitt hat.

9. Antriebseinsatz für eine drehbare Bremsscheibe nach Anspruch 1, **dadurch gekennzeichnet, dass** die Bremsscheibe ein Stator ist.

10. Bremsscheibenstator, der mehrere der ringförmigen Antriebseinsätze für eine drehbare Bremsscheibe nach Anspruch 1 beinhaltet.

## Revendications

1. Insert de commande annulaire rotatif pour disque de frein, comprenant un corps cylindrique en acier, un côté dudit corps étant tronqué pour former une ouverture d'insert qui s'étend axialement à travers le corps de l'insert, l'ouverture d'insert s'étendant dans le corps le long d'un diamètre dudit corps de telle sorte que l'ouverture d'insert se termine à une surface s'étendant radialement qui est située entre le centre de révolution dudit corps et une surface extérieure du corps, et des brides d'extrémité qui s'étendent à partir dudit corps, chacune desdites brides d'extrémité s'étendant radialement vers l'extérieur à partir de la surface extérieure dudit corps pour assurer un positionnement axial dudit insert de commande par rapport à un disque de frein, **caractérisé en ce que** ladite ouverture d'insert comporte une garniture (19) qui comprend une matière composite de carbone - carbone.

2. Insert de commande rotatif pour disque de frein selon la revendication 1, **caractérisé en ce que** ladite garniture de matière composite de carbone - carbone se présente sous la forme de réseaux de fibres disposées de façon aléatoire.

3. Insert de commande rotatif pour disque de frein selon la revendication 1, **caractérisé en ce que** ladite garniture de matière composite de carbone - carbone se présente sous la forme de réseaux de fibres non tissées.

4. Insert de commande rotatif pour disque de frein selon la revendication 3, **caractérisé en ce que** ladite garniture de matière composite de carbone - carbone se présente sous la forme de réseaux de fibres non tissées aiguilletées.

5. Insert de commande rotatif pour disque de frein selon la revendication 1, **caractérisé en ce que** ladite ouverture d'insert est de forme cylindrique.

6. Insert de commande rotatif pour disque de frein selon la revendication 1, **caractérisé en ce que** le diamètre dudit insert est de 0,75 pouce et sa longueur est comprise entre 0,75 et 1,5 pouces.

7. Insert de commande rotatif pour disque de frein selon la revendication 1, **caractérisé en ce que** l'ouverture d'insert qui s'étend dans ledit corps est de forme essentiellement rectangulaire de manière à former un support pour un élément de cannelure d'un tube de couple.

8. Insert de commande rotatif pour disque de frein selon la revendication 1, **caractérisé en ce que** chacune desdits brides comprend une partie tronquée qui est disposée en face du côté correspondant dudit corps.

9. Insert de commande rotatif pour disque de frein selon la revendication 1, **caractérisé en ce que** le disque de frein est un stator.

10. Stator de disque de frein comprenant une pluralité d'inserts de commande annulaires rotatifs pour disque de frein selon la revendication 1.
